Europäisches Patentamt

European Patent Office

Office européen des brevets

(11) Publication number: **0 097 951**
**B1**

# EUROPEAN PATENT SPECIFICATION

(45) Date of publication of patent specification: **30.11.88**

(51) Int. Cl.⁴: **H 02 B 11/04**

(21) Application number: **83106263.3**

(22) Date of filing: **27.06.83**

(54) **Metal-clad switchgear.**

(30) Priority: **28.06.82 JP 110026/82**

(43) Date of publication of application:
**11.01.84 Bulletin 84/02**

(45) Publication of the grant of the patent:
**30.11.88 Bulletin 88/48**

(84) Designated Contracting States:
**DE FR GB**

(56) References cited:
**US-A-2 340 082**

**PATENTS ABSTRACTS OF JAPAN, vol. 3, no. 36 (E-100), 27th March 1979, page 152 E100; & JP - A - 54 15 143 (TOKYO SHIBAURA DENKI K.K.) 02-03-1979**

(73) Proprietor: **HITACHI, LTD.**
**6, Kanda Surugadai 4-chome Chiyoda-ku Tokyo 100 (JP)**

(72) Inventor: **Mitsuyoshi, Ida**
**2-13-12, Mizuki-cho**
**Hitachi-shi Ibaraki-ken (JP)**

(74) Representative: **Strehl, Peter, Dipl.-Ing. et al Strehl, Schübel-Hopf, Schulz Patentanwälte Widenmayerstrasse 17 Postfach 22 03 45 D-8000 München 22 (DE)**

## Description

The present invention relates to a metal-clad switchgear as specified in the preamble of claim 1.

In general, a breaker body of a three-phase circuit breaker rises a shutter covering three phase fixed primary isolating devices provided in a metal-clad switchgear as the breaker body moves into the switchgear, so that the fixed primary isolating devices are uncovered. Then the three-phase breaker primary isolating contacts are inserted into the fixed primary isolating devices, and both are connected electrically. Interphase insulating barriers provided between poles of the three phase circuit breaker work to substantially increase the insulation distance between the breaker primary isolating contacts, so that the width in the direction at right angles to the breaker primary isolating contacts is decreased to reduce the width of the switchgear.

However, the ends of the breaker primary isolating contacts inserted into the fixed primary isolating contacts do not correspond to that of the inter-phase-insulating barriers. To reduce the size of the breaker, therefore, the end of the inter-phase-insulating barrier must be extended to that of the breaker primary isolating contacts to be inserted into the fixed primary isolating devices for increasing the insulation distance between the ends thereof.

However, if the interphase-insulating barrier extends towards the fixed primary isolating devices, the interphase-insulating barrier comes into contact with the shutter being rising when the breaker is inserted into the switchgear and thereby the shutter is prevented from rising.

JP-A-5415143 discloses a switchgear in which the shutter comprises three pairs of folding doors for the three-phase isolating devices. The shutter is driven to open when an end portion of an insulation barrier contacts a guide mechanism of a base plate mounted on the fixed side of the interruption section. Since the shutter comprises the complicated structure of three folding doors which will not always open at exactly the same time, the adjustment of the insulation barrier and the moving speed of the shutter becomes difficult.

US-A-2,340,082 disclose another type of switchgear in which the shutter consists of a plurality of channel shaped vanes mounted in a movable frame so that the vanes are automatically swung from a closed position to a position between the stationary contact members when the breaker enters the cell, and the vanes are closed by reverse movement of the breaker.

## SUMMARY OF THE INVENTION

An object of the present invention is to provide a metal-clad switchgear which can reduce the width thereof extending an end of an inter-phase-insulating barrier to that of breaker primary isolating contacts to be inserted into fixed primary isolating devices to insulate breaker line portions, and preventing the inter-phase-insulating barrier from contacting a shutter being rising when a breaker is inserted into the switchgear.

To accomplish the object of the present invention, adjusting means made by cut-outs provided in either said shutter or said interphase-insulating barrier for preventing said shutter from colliding with said interphase-insulating barrier, said shutter and said interphase-insulating barrier are disposed perpendicular to each other, and said shutter comprises a sheet of plate for said fixed primary isolating devices and moves in a direction transverse to the movement of the breaker body to uncover or cover the fixed primary isolation devices when said breaker body is moved into or out of the switch box. More specifically, if the edge of the interphase-insulating barrier is allowed to move into a recessed portion formed in the shutter as adjusting means, the interphase-insulating barrier does not come into contact with the shutter, when the breaker is inserted into the switchgear; i.e., the shutter can be raised smoothly.

## BRIEF DESCRIPTION OF THE DRAWINGS

Figure 1A is a sectional view of a metal-clad switchgear showing an embodiment of the present invention.

Figure 1B is a sectional view taken along the line Y-Y of Figure 1.

Figure 2 is a sectional view of a metal-clad switchgear showing another embodiment of the present invention.

Figure 3 shows the relationship between a rod and a shutter coupled to an operating lever and a supporting pin.

## PREFERRED EMBODIMENT OF THE INVENTION

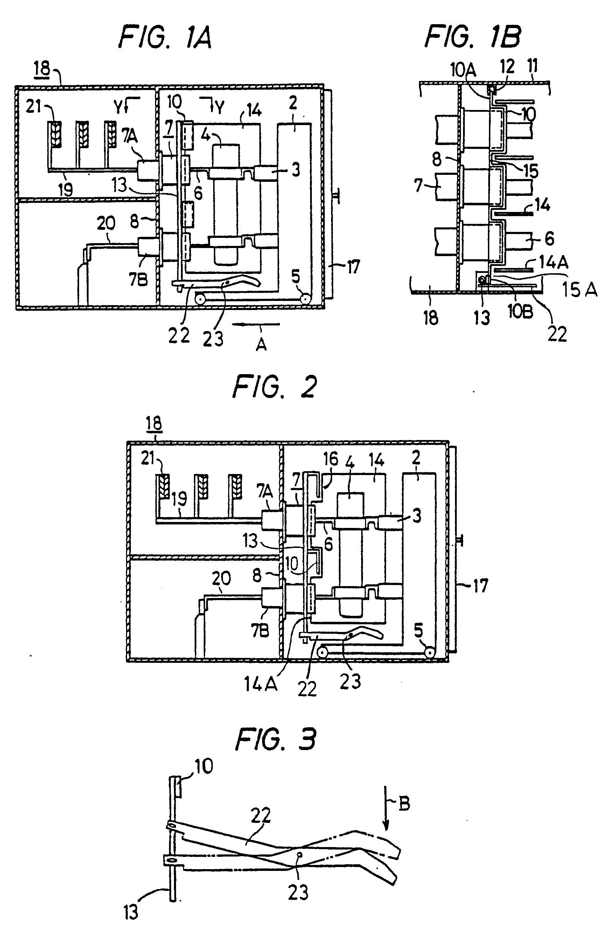

Referring to Figures 1A and 1B, a three-phase drawout type breaker body 2 supports a breaker portion 4 via insulators 3. When the breaker body 2 is pushed in the direction of the arrow A, the breaker body 2 mounted on rollers 5 moves into the switch box 18, and the three phase breaker primary isolating contacts 6 provided in the breaker portion 4 are inserted into the fixed primary isolating devices 7 as shown in Figure 1B. The fixed primary isolating devices 7 are attached to a barrier 8 provided in the switch box 18. The source-side conductors 19 are connected to the fixed primary isolating devices 7A and the source BUS 21. The load-side conductors 20 are connected to the fixed primary isolating devices 7B and a load (not shown). When the breaker body 2 is not accommodated within the switch box 18, the shutter 10 covers the fronts of the fixed primary isolating devices 7. One end 10A of the shutter 10 is inserted into a guide portion 12, and the other end 10B is supported by a rod 13 which extends vertically along the side surfaces 11 of the switch box 18.

As shown in Figure 3, the rod 13 is coupled to an operating lever 22 which extends towards the entrance 17 of the switch box 18. The operating lever 22 is supported by a support pin 23 provided on the inside surface of the switch box 18. When the end of the operating lever settled toward the entrance 17 of the switch box 18 is pressed down in the direction of the arrow B, the other end of the operating lever 22 rises from the position shown by the two-dot chain line to that shown by the solid line via the support pin 23. Therefore, when the breaker body 2 moves into the switch box 18 in the direction of the arrow A, the shutter 10 rises in front of the fixed primary isolating devices 7, and the breaker primary isolating contacts 6 are able to enter the fixed primary isolating devices 7.

When the breaker body 2 is moved from the switch box 18 to the outside thereof along the counter direction of the arrow A, the operating lever 22 is moved to the original position shown by the two-dot chain line of Figure 3 by the weight of the shutter and the operating lever 22.

Recessed portions 15 are formed in the shutter 10 at places which correspond to edges 14A of the interphase-insulating barriers 14. The recessed portions 15 and 15a are made in the shutter 10 perpendicularly facing the corresponding interphase-insulating barriers. When the breaker primary isolating contacts 6 are inserted into the fixed primary isolating devices 7, the edges 14A and the recessed portions 15 overlap. The interphase-insulating barriers 14 also extend as far as the end of the breaker primary isolating contacts 6.

As shown in figure 3, the shutter 10 rises as the breaker body 2 moves into the switch box 18 in the direction of the arrow A and at the same time, the edges 14A move within the recessed portions 15, and do not colide with the shutter 10. Therefore, even if the interphase-insulating barriers 14 extend as far as the ends of the primary isolating contacts 6, the edges 14A do not interrupt the movement of the shutter 10.

Figure 2 illustrates another embodiment in which recessed portions 16 are formed in the edges 14A of the inter-phase-insulating barriers 14 which correspond to the shutter 10 being raised, instead of having recessed portions 15 formed in the shutter 10. The recessed portions 16 are so formed that the edges 14A will not come into contact with the shutter 10 when it is moving. When the recessed portions 16 are formed in the inter-phase-insulating barriers 14, the weight of the shutter 10 can be reduced compared with the embodiment in which the recessed portions 15 are formed in the shutter 10 as shown in Figure 1. Further, the recessed portions 16 can be formed more easily in the edges 14A of the inter-phase-insulating barriers 14 than those in the shutter 10 shown in Figure 1.

According to the present invention in which recessed portions are formed as described above, the edges of the inter-phase-insulating barriers do not come into contact with the shutter. Therefore, the shutter can be raised smoothly. Also, the metal-clad switchgear of the present invention can have a width reduced by about 20% as compared with prior metal-clad switchgears.

## Claims

1. A metal-clad switchgear comprising a switch box (18) provided with an entrance (17) through which a drawout type breaker body (2) and breaker portions (4) supported by the breaker body (2) and having primary insulating contacts (6) move in and out of the switch box (18), fixed primary isolating devices (7) for connection and disconnection with said breaker primary isolating contacts (6), a phase-insulating barrier (14) disposed between said breaker portions (4), and a shutter (10) for covering and uncovering said fixed primary isolating devices (7) when said breaker primary isolating contacts (6) are inserted into said fixed primary isolating devices (7), characterized in that an adjusting means (15, 15a, 16) is made by cut-outs provided in either said shutter (10) or said interphase-insulating barrier (14, 14a) for preventing said shutter (10) from colliding with said interphase-insulating barrier (14, 14a), said shutter (10) and said interphase-insulating barriers (14, 14a) being perpendicular to each other, and in that said shutter (10) comprises a sheet of plate for said fixed primary isolating devices (7) and moves in a direction transverse to the movement of the breaker body (2) to uncover or cover said fixed primary isolating devices (7) when said breaker body is moved into or out of the switch box (18).

2. A metal-clad switchgear as claimed in claim 1, characterized in that said adjusting means comprises recesses (15, 15A) formed in said shutter (10) at a portion corresponding to the edge (14A) of said inter-phase-insulating barrier (14).

3. A metal-clad switchgear as claimed in claim 1, characterized in that said adjusting means comprises recesses (16) formed in the edge portion (14A) of said inter-phase-insulating barrier (14).

## Patentansprüche

1. Metallgekapselte Schaltanlage mit einem Schaltgehäuse (18), das mit einem Eintritt (17) versehen ist, durch den ein herausziehbarer Unterbrecherkörper (2) und Unterbrecherteile (4), die von dem Unterbrecherkörper (2) getragen werden und Haupttrennkontakte (6) besitzen, sich in das Schaltgehäuse (18) hinein und aus ihm herausbewegen, mit festen Haupttrennvorrichtungen (7) zum Verbinden und zum Trennen mit den Unterbrecher-Haupttrennkontakten (6), einer Phasentrennschranke (14), die zwischen den Unterbrecherteilen (4) angeordnet ist, und mit einem Verschluß (10) zum Abdecken und zum Freigeben der festen Haupttrennvorrichtungen (7), wenn die Unterbrecher-Haupttrennkontakte (6) in die festen Primärtrennvorrichtungen (7) eingesetzt werden, dadurch gekennzeichnet, daß eine Einstellvorrichtung (15, 15a, 16) durch Ausschnitte hergestellt ist, die in dem Verschluß (10) oder in der Phasentrennschranke (14, 14a) vorgesehen sind, um zu verhindern, daß der Verschluß (10) an die Phasentrennschranke (14, 14a) anstößt, wobei der Verschluß (10) und die Phasentrennschranken (14, 14a) senkrecht zueinander angeordnet sind, und daß der Verschluß (10) eine Metallplatte für die festen Haupttrennvorrichtungen (7) aufweist und sich in einer Richtung quer zur Bewegung des Unterbrecherkörpers (2) bewegt, um die festen Haupttrennvorrichtungen (7) freizugeben oder abzudecken, wenn der Unterbrecherkörper in das Schaltgehäuse (18) hinein oder aus ihm herausbewegt wird.

2. Metallgekapselte Schaltanlage nach Anspruch 1, dadurch gekennzeichnet, daß die Einstellvorrichtung Rücksprünge (15a) aufweist, die in dem Verschluß (10) in einem dem Rand (14a) der Phasentrennschranke (14) entsprechenden Teil ausgebildet sind.

3. Metallgekapselte Schaltanlage nach Anspruch 1, dadurch gekennzeichnet, daß die Einstellvorrichtung Rücksprünge (16) aufweist, die in dem Randteil (14a) der Phasentrennschranke (14) angeordnet sind.

## Revendications

1. Installation de commutation blindée comportant un coffret (18) muni d'une entrée (17), par laquelle un corps (2) de disjoncteur de type amovible et des parties (4) du disjoncteur supporté par le corps (2) du disjoncteur et possédant des contacts isolants principaux pénètrent dans et sortent du coffret (18), des dispositifs d'isolation principaux fixes (7) servant à connecter et déconnecter lesdits contacts isolants principaux (6) du disjoncteur, une barrière (14) d'isolation des phases, disposée entre lesdites parties (4) du disjoncteur, et un obturateur (10) servant à recouvrir et découvrir lesdits dispositifs d'isolation principaux fixes (7) lorsque lesdits contacts isolants principaux (6) du disjoncteur sont insérés dans lesdits dispositifs d'isolation principaux fixes (7), caractérisée en ce que des moyens d'ajustement (15, 15a, 16) sont constitués par des découpes ménagées soit dans ledit obturateur (10), soit dans ladite barrière (14, 14a) d'isolation des phases de manière à empêcher ledit obturateur (10) de venir heurter ladite barrière (14, 14a) d'isolation des phases, ledit obturateur (10) et lesdites barrières (14, 14a) d'isolation des phases étant perpendiculaires entre eux, et en ce que ledit obturateur (10) comporte une feuille formant plaque pour lesdits dispositifs d'isolation principaux fixes (7) et se déplace dans une direction transversale au déplacement du corps du disjoncteur de manière à découvrir ou recouvrir lesdits dispositifs d'isolation principaux fixes (7) lorsque ledit corps du disjoncteur est introduit dans ou ressorti du coffret (18).

2. Installation de commutation blindée selon la revendication 1, caractérisée en ce que lesdits moyens d'ajustement comprennent des renfoncements (15, 15A) ménagés dans ledit obturateur (10) dans une partie correspondant au bord (14A) de ladite barrière (14) d'isolation des phases.

3. Installation de commutation blindée selon la revendication 1, caractérisée en ce que lesdits moyens d'ajustement comprennent des renfoncements (16) ménagés dans la partie (14A) du bord de ladite barrière (14) d'isolation des phases.

EP 0 097 951 B1

FIG. 1A

FIG. 1B

FIG. 2

FIG. 3

1